Europäisches Patentamt

European Patent Office

Office européen des brevets

(19)

(11) Numéro de publication: **0 056 747
B1**

## (12) FASCICULE DE BREVET EUROPEEN

(45) Date de publication du fascicule du brevet:
14.08.85

(51) Int. Cl.⁴: **G 01 L 19/02**, G 01 P 5/165

(21) Numéro de dépôt: 82400021.0

(22) Date de dépôt: 08.01.82

(54) **Mât anémométrique pour la détermination de la vitesse relative d'un fluide et d'un support, notamment pour aéronef.**

(30) Priorité: 08.01.81 FR 8100186

(43) Date de publication de la demande:
28.07.82 Bulletin 82/30

(45) Mention de la délivrance du brevet:
14.08.85 Bulletin 85/33

(84) Etats contractants désignés:
**DE GB IT NL SE**

(56) Documents cités:
**DE - C - 628 410
DE - C - 706 862
GB - A - 699 939
GB - A - 1 418 970
US - A - 3 034 353**

(73) Titulaire: **FGP INSTRUMENTATION, 84 rue Henri Prou,
F-78340 Les-Clayes-Sous-Bols (FR)**

(72) Inventeur: **Gibert, Francis, Jean-Paul, Chemin de Basse
Boissière CR3, Les Mesnuls F-78490 Montfort L'Amaury
(FR)**

(74) Mandataire: **Arnaud, Jean Pierre Alfred, 94 rue Saint
Lazare, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un mât anémométrique destiné à la détermination de la vitesse relative d'un fluide et d'un support, suivant une direction pouvant varier; elle convient à la mesure de la vitesse de courants de fluide et notamment de la vitesse des aéronefs.

La vitesse des aéronefs est en général déduite de la différence entre une pression totale ou pression dynamique d'une part et une pression statique de l'air entourant l'aéronef d'autre part. Comme l'air est un fluide compressible, la vitesse est déterminée à l'aide d'une formule relativement complexe, représentée par la racine carrée d'un terme comprenant la différence entre la pression totale et la pression statique.

La pression statique est en général détectée par un tronçon de tube sensiblement parallèle à la direction d'écoulement et ayant une paroi percée de petits trous. La pression totale est mesurée à l'aide d'une antenne Pitot, comprenant un tube de quelques millimètres de diamètre interne se terminant par un orifice au point d'impact du fluide sur le tube.

On constate que la pression totale mesurée a une valeur qui varie peu lorsque le tronçon de tube formant l'antenne Pitot est incliné par rapport au vecteur vitesse du courant, dans une plage d'angles relativement modérée de l'ordre de ± 20°.

Par contre, on constate que les pressions statiques mesurées présentent parfois de très grosses erreurs. En effet lorsqu'un tube ayant par exemple huit petits trous formés à sa périphérie, est incliné par rapport au vecteur vitesse du courant dans lequel il est placé, certains orifices sont plus exposés que d'autres au courant de fluide et transmettent une partie de la pression totale alors que d'autres orifices sont légèrement en dépression. On constate que, dans le cas des aéronefs et notamment pendant les opérations de décollage et d'atterrissage, les erreurs présentées par la pression statique peuvent atteindre ou dépasser 100 mbar. Ces erreurs sont d'autant plus gênantes qu'elles se reportent intégralement sur la différence des pressions.

On sait que les indications de vitesse ont une importance primordiale lors des manœuvres telles que les décollages et les atterrissages, dans lesquelles le tube de prise de pression statique n'a cependant pas sa position nominale.

Pour remédier à cet inconvénient, on utilise des circuits électroniques, montés après le dispositif de prise de pression statique et destinés à corriger les valeurs mesurées. Cependant, les résultats ne sont ni fiables ni rapides étant donné que les corrections sont effectuées sous forme empirique et d'après la variation d'autres paramètres dont la mesure n'est pas instantanée.

On a aussi essayé de réduire les inconvénients de ces mesures de pression par détermination de celles-ci aussi loin que possible des éléments des aéronefs qui peuvent créer des perturbations. De cette manière, les corrections apportées ne dépendent plus que de l'inclinaison du vecteur vitesse par rapport au tube de prise de pression et peuvent être déterminées d'une manière plus fiable. Par exemple, on a essayé d'installer les prises de pression à l'extrémité d'une perche montée en avant de l'aéronef, sur le nez du fuselage. Cependant, cette disposition présente deux inconvénients principaux. D'abord, étant donné la faible section de la perche, il est difficile d'y loger les circuits de calcul et de mesure de vitesse, et les pressions détectées doivent donc être transmises par des tubes qui ont ainsi une grande longueur. Pour cette raison, l'inertie de ce système est impotante et l'affichage d'une mesure présente un retard non négligeable par rapport au moment de la prise des pressions. Cette solution est loin de donner satisfaction dans les cas des avions militaires rapides car le retard correspond au parcours d'une distance importante, de plusieurs mètres et même plusieurs dizaines de mètres.

Le second inconvénient des perches est qu'elles portent une ombre sur le radar que comporte habituellement un aéronef.

Ainsi, même lors de l'utilisation d'une perche, des corrections doivent être apportées aux mesures, en fonction de l'inclinaison relative de la perche et du vecteur vitesse.

Le brevet britannique n° 1 418 970 décrit un appareil de mesure de la différence des pressions statiques de part et d'autre d'une voile d'un yacht. L'appareil comporte deux calottes sphériques placées de part et d'autre d'une voile et délimitant entre elles deux chambres de prise de pression statique qui sont séparées par un diaphragme ou par une cloison rigide et qui sont reliées à des chambres séparées d'un détecteur différentiel. L'une des calottes permet la mesure de la pression statique du côté au vent et l'autre du côté sous le vent. Les figures représentent l'appareil avec deux calottes de forme sans doute sphérique, mais la description n'indique pas que ces calottes sont sphériques ni quels avantages peut présenter une telle forme.

Le brevet britannique n° 699 939 décrit un appareil de mesure de la vitesse des navires dans l'eau. Il concerne une sorte de mât qui a une prise de pressin statique et une prise de pression dynamique. Le navire sur lequel est monté le mât ne peut présenter qu'un tangage très inférieur aux angles de tangage d'un aéronef en cours de vol. Le mât a ainsi une forme cylindrique de section non circulaire.

L'invention remédie aux inconvénients des dispositifs connus. Plus précisément, elle permet la détermination de la vitesse relative d'un fluide et d'un support, tel qu'un aéronef, sans que la variation d'incidence du fluide qui s'écoule le long du mât anémométrique perturbe la valeur mesurée de la pression statique.

L'invention concerne un mât anémométrique destiné à la détermination de la vitesse relative d'un fluide et d'un support, suivant une direction pouvant varier dans un secteur circulaire sensiblement plan délimité autour d'une direction moyenne, à partir de valeurs d'une pression statique et d'une pression totale, le mât est du type qui comporte un corps destiné à être fixé au support, un dispositif manosensible de prise de pression statique fixé au corps, destiné à former un premier signal de pression et comportant au moins un orifice formé dans une surface dans laquelle il débouche en direction sensiblement perpendiculaire à ladite direction moyenne, et un dispositif manosensible de prise de pression totale, fixé au corps, ayant au moins un orifice débouchant en direction sensiblement parallèle à ladite direction moyenne et destiné à former un deuxième signal de pression, ce mât anémométrique étant caractérisé en ce que: ladite surface du dispositif manosensible de prise de pression statique dans laquelle débouche au moins un orifice comporte au moins une partie de surface de révolution dont l'axe de révolution est perpendiculaire au plan du secteur circulaire, l'axe de révolution passe par ledit orifice ou à proximité de celui-ci, ladite partie de surface de révolution a une étendue angulaire au moins égale à celle du secteur circulaire, et ladite partie de surface de révolution est disposée au moins en amont de l'orifice par rapport au sens d'écoulement du fluide, si bien que l'écoulement du fluide qui parvient à proximité de l'orifice est toujours identique et s'effectue le long d'une surface de même profil et sur une même longueur lorsque la direction du fluide varie dans le secteur circulaire.

Le mât anémométrique selon l'invention comporte un dispositif manosensible de prise de pression statique qui a une forme de révolution telle que, lorsque l'incidence varie, l'écoulement du fluide qui parvient à proximité du dispositif est toujours identique et s'effectue le long d'une surface de même profil; les conditions aérodynamiques sont donc toujours identiques lorsque la direction du fluide varie.

L'invention vise ainsi un mât anémométrique qui ne nécessite pas de longs tubes de connexion et qui a donc une réponse rapide. Ce mât peut être placé à un endroit auquel il ne porte pas d'ombre sur le radar du bord. Le mât est robuste, fiable et simple.

Il est avantageux que le dispositif manosensible de prise de pression statique comporte plusieurs orifices débouchant dans une même chambre.

Dans une variante, le dispositif manosensible de pression statique est double et il a une forme symétrique par rapport au plan longitudinal du mât.

L'orifice ou les orifices d'un premier côté et l'orifice ou les orifices de l'autre côté du dispositif manosensible de pression statique sont avantageusement reliés à des entrées différentes d'un dispositif destiné à former un signal résultant de pression statique. Ce dispositif formant un signal résultant de pression statique est par exemple une chambre de tranquillisation.

Le dispositif de prise de pression totale a de préférence plusieurs orifices qui débouchent dans des directions non parallèles mais comprises dans un secteur circulaire de même étendue que le secteur circulaire de variation de la direction d'écoulement du fluide.

Le mât comporte avantageusement des conduits destinés à transmettre des signaux de pression hors du mât. Dans une variante, le mât comporte un dispositif de détermination de la vitesse relative, destiné à recevoir des premier et second signaux de pression et à former un signal représentatif de la vitesse relative.

D'autre avantages de l'invention ressortiront mieux de la description qui va suivre, faite en référence aux dessins annexés sur lesquels:

la figure 1 est une élévation d'un mât anémométrique selon un premier mode de réalisation de l'invention:
la figure 2 est une coupe suivant la ligne 2–2 de la figure 1:
la figure 3 est une coupe suivant la ligne 3–3 d'une variante de mât selon l'invention;
la figure 4 est une élévation d'un second mode de réalisation de mât anémométrique selon l'invention; et
la figure 5 est une coupe transversale d'une variante de l'extrémité d'un mât selon l'invention.

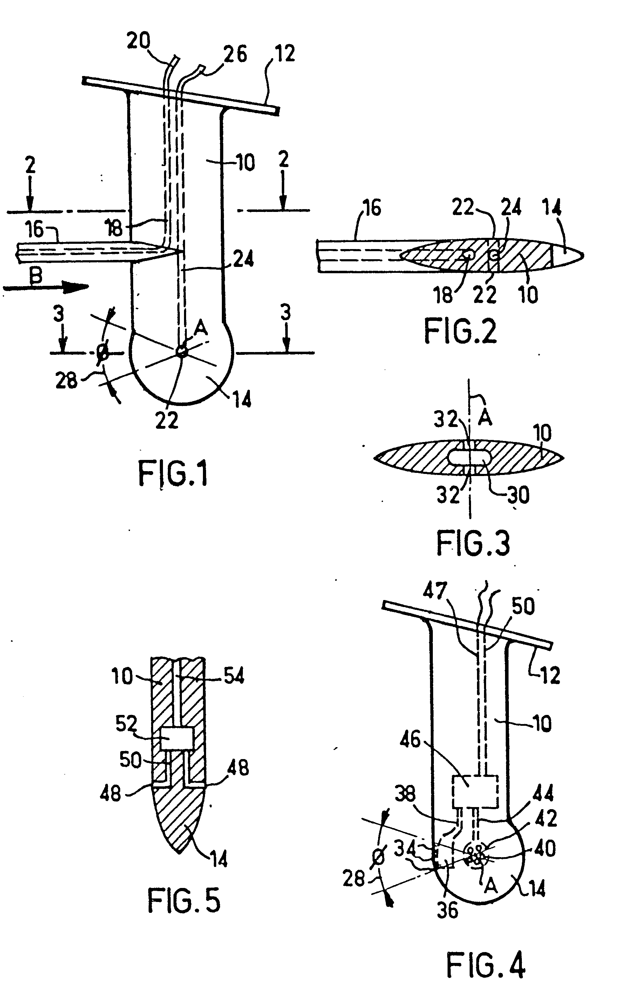

Sur la figure 1, la référeance 10 désigne de façon générale un mât anémométrique selon l'invention, muni d'une bride 12 destinée à sa fixation sur le fuselage ou une aile d'un aéronef. Le mât 10 se termine par une extrémité arrondie 14 contenant le dispositif manosensible de prise de pression statique. Le corps du mât porte en outre un tube 16 formant une antenne Pitot ayant un orifice débouchant sensiblement dans la direction prévue d'ecoulement de l'air, comme indiqué par la direction B. La pression détectée à l'orifice est transmise par un conduit interne 18 à un conduit externe 20 destiné à être relié à un dispositif convenable de détermination de la vitesse.

Le dipositif manosensible de prise de pression statique comporte un orifice 22 formé sensiblement au centre de l'extrémité 14 et relié par un tube interne 24 à un tube externe 26 relié lui aussi au dispositif de détermination de la vitesse. Selon l'invention, et comme indiqué sur la figure 3, correspondant à une variante décrite dans la suite du présent mémoire, la surface dans laquelle débouche l'orifice 22 est une surface de révolution, ayant un axe de révolution A, au moins dans le secteur circulaire 28 d'angle $\emptyset$. De préférence, la surface de l'extrémité 14 est de révolution non seulement dans la partie amont de ce secteur circulaire 28 mais aussi dans la partie aval, au moins sur une certaine distance.

Ainsi, lorsque la direction du courant de fluide, c'est-à-dire son vecteur vitesse, est parallèle à une direction comprise dans le secteur 28, l'air qui parvient à l'orifice comprise dans le secteur 28, l'aire qui parvient à l'orifice 22 s'est toujours écoulé le long d'une surface de même profil et sur une même longueur, si bien que l'écoulement a subi un même effet aérodynamique jusqu'à l'orifice quelle que soit la direction du vecteur vitesse, dans le secteur circulaire 28. De cette manière, la pression statique mesurée ne varie pas avec l'incidence.

La figure 2 indique que le corps 10 a une forme profilée très aérodynamique, opposant une résistance aussi faible que possible à la circulation de l'air. La figure 3 indique que l'extrémité 14 a sensiblement une forme de lentille biconvexe, par exemple de 20 à 100 mm de rayon.

La figure 2 indique que, en réalité, le dispositif de prise de pression statique a deux orifices 22 débouchant sur les deux faces du capteur qui est symétrique par rapport à un plan contenant le vecteur vitesse.

Dans la variante de la figure 3, les deux orifices 32 de prise de pression statique débouchent directement dans une chambre interne 30.

La figure 4 représente une variante de mât anémométrique selon l'invention. Sur cette figure, les références identiques à celles de la figure 1 désignent des éléments analogues. Ainsi, le corps 10 a une bride 12 de fixation et une extrémité 14. Cependant, le tube 16 de prise de pression totale est remplacé par un dispositif manosensible comportant plusieurs orifices 34 formés au bord d'attaque de l'extrémité 14. Ces orifices sont formés de manière qu'ils débouchent dans des directions qui divergent et qui sont elles aussi comprises dans le secteur circulaire 28. De cette manière, un orifice 34 est sensiblement perpendiculaire à la direction du courant de fluide, quelle que soit l'inclinaison du mât anémométrique. Ces orifices 34 débouchent dans une chambre 36 qui est reliée par un conduit 38 à un dispositif 46, décrit plus en détail dans la suite. Plusieurs orifices 40 de prise de pression statique, rapprochés les uns des autres et groupés autour de l'axe A de révolution, débouchent dans une chambre interne 42 qui est reliée par un conduit 44 au dispositif 46. Dans une variante, un conduit est associé à chacun des orifices et rejoint le dispositif 46.

Le dispositif 46 qui reçoit les signaux de pressions totale et statique comporte des capteurs et un dispositif électronique destiné à calculer directement la vitesse et à la transmettre par un câble 47. A cet effet, il est alimenté par un câble 50. Ainsi, dans ce mode de réalisation, la fixation mécanique du mât 10, par exemple sur le fuselage, et la connexion des câbles 47 et 50 suffisent pour que l'appareil soit automatiquement opérationnel.

Dans une variante, des capteurs placés au niveau des orifices forment directement des signaux électriques correspondant aux pressions. Les signaux parviennent au dispositif de calcul de la vitesse, placé dans le mât ou à l'extérieur de celui-ci.

La figure 5 représente une variante dans laquelle deux orifices 48 de prise de pression statique sont reliés par des conduits 50 à une chambre 52 de tranquillisation. Le signal résultant de pression statique est transmis par un conduit 54 au dispositif utilisateur. La chambre 52 peut avoir aussi une forme convenable lui permettant, au lieu d'égaliser les pressions qu'elle reçoit, de les pondérer suivant un autre rapport.

Bien entendu, le mât anémométrique comporte éventuellement des dispositifs nécessaires à son dégivrage, bien connus des hommes du métier, lorsque cette propriété s'avère nécessaire.

Ainsi, l'invention vise également un mât anémométrique sans pièce mobile, c'est-à-dire pouvant se satisfaire d'un entretien sommaire. Les résultats qu'il donne sont fiables, malgré les variations d'incidence du courant de fluide dont la vitesse est mesurée.

L'expérience montre que les valeurs des vitesses mesurées sont fidèles et précises pendant les décollages et les atterissages, même en l'absence de correction. Une certaine correction peut cependant être apportée en fonction du facteur de forme de l'extrémité 14. Il faut cependant noter que ce facteur de correction ne varie pas avec l'angle d'incidence et la correction peut être assurée de façon fiable et reproductible par des circuits simples.

Il est bien entendu que l'invention n'a été décrite et représentée qu'à titre d'exemples préférentiels.

**Revendications**

1. Mât anémométrique destiné à la détermination de la vitesse relative d'un fluide et d'un support, suivant une direction pouvant varier dans un secteur circulaire (28) sensiblement plan délimité autour d'une direction moyenne, à partir de valeurs d'une pression statique et d'une pression totale, ledit mât étant du type qui comporte
- un corps (10) destiné à être fixé au support,
- un dispositif manosensible de prise de pression statique fixé au corps (10), destiné à former un premier signal de pression et comportant au moins un orifice (22) formé dans une surface (14) dans laquelle il débouche en direction sensiblement perpendiculaire à ladite direction moyenne, et
- un dispositif manosensible (16) de prise de pression totale, fixé au corps (10), ayant au moins un orifice débouchant en direction sensiblement parallèle à ladite direction moyenne et destiné à former un deuxième signal de pression, ledit mât anémométrique étant caractérisé en ce que
- ladite surface du dispositif manosensible de prise de pression statique dans laquelle débouche au moins un orifice (22) comporte au moins une partie de surface de révolution dont l'axe de révolution (A) est perpendiculaire au plan du secteur circulaire (28),
- l'axe de révolution (A) passe par ledit orifice (22) ou à proximité de celui-ci,
- ladite partie de surface de révolution a une étendue angulaire (∅) au moins égale à celle du secteur circulaire (28), et
- ladite partie de surface de révolution est disposée au moins en amont de l'orifice (22), par rapport au sens (B) d'écoulement du fluide, si bien que l'écoulement du fluide qui parvient à proximité de l'orifice (22) est toujours identique et s'effectue le long d'une surface de même profil et sur une même longueur lorsque la direction du fluide varie dans le secteur circulaire (28).

2. Mât anémométrique selon la revendication 1, caractérisé en ce que le dispositif manosensible de prise de pression statique comporte plusieurs orifices (40) débouchant dans une même chambre (42).

3. Mât anémométrique selon l'une quelconque des revendication 1 et 2, caractérisé en ce que le dispositif manométrique de prise de pression statique est double et a une forme symétrique par rapport à un plan longitudinal du mât.

4. Mât anémométrique selon la revendication 3, caractérisé en ce que l'orifice ou les orifices (40) d'un premier côté et l'orifice ou les orifices (40) de l'autre côté du dispositif manosensible de prise de pression statique sont reliés à des entrées différentes d'un dispositif destiné à former un signal résultant de pression statique .

5. Mât anémométrique selon la revendication 4, caractérisé en ce que le dispositif (42) destiné à former un signal résultant de pression statique est une chambre de tranquillisation.

6. Mât anémométrique selon l'une quelconque des revendications précédentes, caractérisé en ce que le dispositif de prise de pression totale a plusieurs orifices (34) débouchant en directions non parallèles, mais comprises dans un secteur circulaire de même étendue que le secteur circulaire (28) de variation de la direction d'écoulement du fluide.

7. Mât anémométrique selon l'une quelconque des revendications précédentes, caractérisé en ce qu'il comporte en outre des conduits (18, 24) destinés à transmettre lesdits signaux de pression hors du mât.

8. Mât anémométrique selon l'une quelconque des revendications 1 à 6, caractérisé en ce qu'il comporte en outre un dispositif (46) de détermination de la vitesse relative, destiné à recevoir des premier et second signaux de pression et à former un signal représentatif de la vitesse relative.

**Claims**

1. Anemometric mast for determining relative velocity between a fluid and a carrier, along a direction changing in a substantially plane circle sector (28) defined about a mean direction, from values of a static pressure and of a total pressure, said mast being of the type which includes
– a body (10) to be secured to said carrier,
– pressure sensitive means for detecting static pressure, secured to said body (10), for forming a first pressure signal and including at least an orifice (22) through a surface (14) in which it opens in a direction substantially perpendicular to said mean direction, and
– pressure sensitive means (16) for detecting total pressure, secured to said body (10), including at least an orifice opening in a direction substantially parallel to said mean direction, and for forming a second pressure signal, said anemometric mast being characterized in that
– said surface of said pressure sensitive means for detecting static pressure in which at least one orifice (22) opens includes at least a portion of revolution surface having a revolution axis (A) normal to plane of circle sector (28),
– said revolution axis (A) goes through said orifice (22) or near said orifice,
– said revolution surface portion has an angular area (∅) at least equal to this of said circle sector (28), and
– said revolution surface portion is disposed at least ahead said orifice (22) in the direction (B) of flowing fluid, so that fluid flow arriving near said orifice (22) is always the same and is along a surface having the same contour and on the same length when fluid direction changes in said circle sector (28).

2. Anemometric mast according to claim 1, characterized in that said pressure sensitive means for detecting static pressure includes several orifices (40) opening in a same chamber (42).

3. Anemometric mast according to any of claims 1 and 2, characterized in that pressure sensitive means for detecting static pressure is double and has a shape symmetrical about longitudinal plane of said mast.

4. Anemometric mast according to claim 3, characterized in that said orifice or orifices (40) of first side and said orifice or orifices (40) of other side of pressure sensitive means for detecting static pressure are connected to different inputs of means for forming a resultant static pressure signal.

5. Anemometric mast according to claim 4, characterized in that said means (42) for forming a resultant static pressure signal is a plenum chamber.

6. Anemometric mast according to anyone of preceding claims, characterized in that said total pressure detecting means has several orifices (34) opening along directions which are not parallel but are included in a circle sector having the same area as said circle sector (28) in which fluid flow direction changes.

7. Anemometric mast according to anyone of preceding claims, characterized in that it further includes ducts (18, 24) for transmitting said pressure signal out of said mast.

8. Anemometric mast according to anyone of claims 1 to 6, characterized in that it further includes means (46) for determining relative velocity, said means being for receiving first and second pressure signals and for forming a signal representative of relative velocity.

**Patentansprüche**

1. Windmessermast für die Bestimmung der Relativgeschwindigkeit eines fluiden Mediums zu einem Träger in einer Richtung, die in einem im wesentlichen ebenen Kreissektor (28), der um eine mittlere Richtung begrenzt ist, variieren kann, aus Werten eines statischen Druckes und eines Gesamtdruckes, wobei der Mast von solcher Art ist, dass er enthält:

- einen Körper (10), der zur Befestigung an dem Träger bestimmt ist,
- eine druckempfindliche Vorrichtung zur Aufnahme des statischen Druckes, welche an dem Körper (10) befestig und dazu bestimmt ist, ein erstes Drucksignal zu bilden, sowie wenigstens eine Öffnung (22) enthält, die in einer Oberfläche (14) gebildet ist, in welcher sie in einer Richtung ausmündet, die im wesentlichen senkrecht zu der genannten mittleren Richtung ist, und
- eine druckempfindliche Vorrichtung (16) zur Aufnahme des Gesamtdruckes, welche an dem Körper (10) befestigt ist und wenigstens eine Öffnung aufweist, welche in einer Richtung im wesentlichen parallel zu der genannten mittleren Richtung ausmündet, sowie zur Bildung eines zweiten Drucksignals bestimmt ist,
- wobei der Windmessermast dadurch gekennzeichnet ist, dass
- die gennante Oberfläche der druckempfindlichen Vorrichtung zur Aufnahme des statischen Druckes und in welcher wenigstens eine Öffnung (22) ausmündet, wenigstens einen Teil einer Umdrehungsfläche umfasst, deren Umdrehungsachse (A) senkrecht zur Ebene des Kreissektors (28) ist,
- die Umdrehungsachse (A) durch die genannte Öffnung (22) hindurch oder in der Nähe derselben vorbeigeht,
- der genannte Teil einer Umdrehungsfläche eine Winkelerstreckung (∅) aufweist, die wenigstens gleich derjenigen des Kreissektors (28) ist, und
- der genannte Teil einer Umdrehungsfläche in Bezug auf die Strömungsrichtung (B) des fluiden Mediums wenigstens vor der Öffnung (22) angeordnet ist, so dass die Strömung des fluiden Mediums, welche in die Nähe der Öffnung (22) gelangt, stets dieselbe ist und entlang einer Oberfläche desselben Profils und über dieselbe Länge erfolgt, wenn die Richtung des fluiden Mediums in den Kreissektor (28) sich ändert.

2. Windmessermast nach Anspruch 1, dadurch gekennzeichnet, dass die druckempfindliche Vorrichtung zur Aufnahme des statischen Druckes mehrere Öffnungen (40) umfasst, welche in derselben Kammer (42) münden.

3. Windmessermast nach Anspruch 1 oder 2, dadurch gekennzeichnet, dass die druckempfindliche Vorrichtung zur Aufnahme des statischen Druckes doppelt ausgebildet ist und eine symmetrische Form in bezug auf eine Längsebene des Mastes aufweist.

4. Windmessermast nach Anspruch 3, dadurch gekennzeichnet, dass die Öffnung oder die Öffnungen (40) auf einer ersten Seite sowie die Öffnung oder die Öffnungen (40) auf der anderen Seite der druckempfindlichen Vorrichtung zur Aufnahme des statischen Druckes an verschiedene Eingänge einer Vorrichtung angeschlossen sind, die dazu bestimmt ist, ein resultierendes Signal für den statischen Druck zu bilden.

5. Windmessermast nach Anspruch 4 dadurch gekennzeichnet, dass die Vorrichtung (42) zur Bildung eines resultierenden Signales eines statischen Druckes eine Beruhigungskammer ist.

6. Windmessermast nach einem der vorstehenden Ansprüche, dadurch gekennzeichnet, dass die Vorrichtung zur Aufnahme des Gesamtdruckes mehrere Öffnungen (34) besitzt, welche in nicht parallelen Richtungen ausmünden, jedoch in einem Kreissektor gleicher Erstreckung wie der Kreissektor (28) der Veränderung der Strömungsrichtung des fluiden Mediums enthalten sind.

7. Windmessermast nach einem der vorstehenden Ansprüche, dadurch gekennzeichnet, dass er ferner Leitungen (18, 24) enthält welche dazu bestimmt sind, die genannten Drucksignale nach ausserhalb des Mastes zu übertragen.

8. Windmessermast nach einem der Ansprüche 1 bis 6, dadurch gekennzeichnet, dass er ferner eine Vorrichtung (46) zur Bestimmung der Relativgeschwindigkeit umfasst, die dazu bestimmt ist, erste und zweite Drucksignale zu empfangen und ein Signal zu bilden, welches die Relativgeschwindigkeit darstellt.

FIG.1

FIG.2

FIG.3

FIG.5

FIG.4